# EUROPEAN PATENT APPLICATION

(11) **EP 1 512 329 A1**
(43) Date of publication of application: **09.03.2005**
(21) Application number: 03733224.4
(22) Date of filing: 30.05.2003
(51) Int. Cl.: A23L 1/20

(54) **PULSE PASTE, PROCESS FOR PRODUCING THE SAME AND PROCESSED FOOD FROM THE PULSE PASTE**

(30) Priority: 31.05.2002 JP 2002158552
(71) Applicant: Isyokudougensya Co., Ltd, Tokushima 770-0942 (JP)
(72) Inventor: HISATOMI, Masanori c/o ISYOKUDOUGENSYA CO., LTD, Tokushima 770-0942 (JP)
(74) Representative: Staudt, Hans-Peter, Dipl.-Ing.
(86) International application number: PCT/JP2003/006893
(87) International publication number: WO 2003/101220

(57) **Abstract**

A pulse paste directly obtained from pulse that has high nutritional value, retains flavor, can realize a wide spectrum of use and can form homogeneous paste condition; a process for producing a pulse paste wherein the pulse paste can be efficiently obtained from pulse in a direct simple manner; and a processed food from the pulse paste that can replace conventional confectionery or food based on eggs. The pulse paste is obtained by disintegrating a raw material of pulse containing water so that the water content is in the range of 75 to 95 wt.% based on the total weight of pulse associated component and water. A process food is obtained from the thus obtained pulse paste.

## Description

### BACKGROUND OF THE INVENTION

### (1) Field of the Invention:

The present invention relates to pulse paste, process for producing the same and processed food from the pulse paste, particularly to the pulse paste that can be directly obtained from pulse such as soybean in a direct simple manner, the process for producing the same and the processed food, such as mayonnaise related food, which is obtained from said pulse paste and has satisfactory flavor and texture.

### (2) Related art statement:

It is necessary to control intake of cholesterol and to reduce intake of animal foods, such as eggs if someone has an allergy to these foods. Alternative processed foods which use none of these animal foods are expected to be developed.

The process for producing paste from bean curd refuse is stated in Japanese Provisional Publication NO.266240/1996, Japanese Provisional Publication Official gazette No.99037/1998, etc. In particular, Japanese Provisional Publication NO. 266240/1996 discloses the method for mixing warm water and seasoning into bean curd refuse, grinding down by friction and making paste therefrom.

However, because bean curd refuse itself is a residuum squeezed from soymilk that contains high nutrition such as protein and fat, it has the disadvantages that it is poor in nutrients, it spoils flavor and the dry texture remains even after it is made into paste.

In addition, the conventional paste is not obtained directly from pulse, but obtained from bean curd refuse. The process for producing paste gets complicated as it has to go through the process for producing been curd refuse.

Also, Japanese Provisional Publication Official gazette No. 99037/1998 discloses the method for producing soybean food materials by soaking and heating soybeans, which is substantially not swollen by absorbing water with its skin evacuated and its hypocotyl removed, into heated water where alkali is added, and crushing it under given condition.

According to this method, processed foods with high nutrition are expected to be produced because most part of soybean can be used. However, the method for production gets complicated because the process of exuviating skin and removing hypocotyl is necessary. Further, soybean food materials obtained by crushing are mostly used for foods such as beans jam (an in Japanese) and mashed potatoes, and in case it is used for mayonnaise related food as an alternative of eggs, it is essential to add emulsifying agent, such as increasing-viscosity polysaccharides, oligosaccharide, lecithin, fatty acid monoglyceride, fatty acid poli-glyceride, saccharose fatty acid ester, and sorbitan fatty acid ester because emulsification ability of the soybean food materials are lower compared to egg yolk.

On the other hand, Japanese Provisional Publication NO. 119260/2002 discloses the method for producing alternative egg processed food without using eggs; in particular, the method for preparation of scrambled egg related food is stated. Also, the method for preparation of mayonnaise related food using condensed tofu is stated in Japanese Provisional Publication NO.17292/2002.

However, the processed food which uses pulse paste directly obtained from pulse has not been disclosed and moreover, there has not been even any suggestion about mayonnaise related food. There has been no technique for producing the mayonnaise related food using pulse paste until today.

The present invention is to overcome the above stated problems and provide the pulse paste directly obtained from pulse that has high nutritional value, retains flavor, can realize a wide spectrum of use, can form homogeneous paste condition.

Also, another object of the present invention relates to a process for producing the pulse paste wherein the pulse paste can be efficiently obtained from pulse in a direct simple manner.

In addition, another object of the present invention relates to a processed food from the pulse paste that can replace conventional confectionary or food based on eggs.

### SUMMARY OF THE INVENTION

The present inventors have found out, as a result of studies to overcome the above problems, that it is possible to form homogeneous paste condition directly from pulse and said paste has the emulsification ability similar to that of egg yolk by using the water containing pulse which is made not only by soaking and swelling pulse in water but by making pulse contain the given weight rate of water, and have finally achieved the present invention.

The invention related to claim is a pulse paste obtained by disintegrating a raw material of pulse containing water so that the water content is in the range of 75 to 95 wt.% based on the total weight of pulse associated component and water contained in pulse.

The invention related to claim 2 is the pulse paste as claimed in claim 1, wherein the water content is in the range of 88 to 92 wt.%.

The invention related to claim 3 is the pulse paste as claimed in claims 1 and 2, wherein said pulse is soybean.

The invention related to claims 4 is a process for producing the pulse paste of claims 1 to 3, which comprises making pulse contain 75 to 95 wt. % of water content, and then, disintegrating said pulse and processing them to paste.

The invention related to claim 5 is the process for producing the pulse paste as claimed in claim 4, wherein the method for making pulse contain water molecules comprises a process of crushing the swollen pulse.

The invention related to claim 6 is the process for producing the pulse paste as claimed in claim 5, wherein the method of making pulse contain water molecules includes a process of crushing pulse, soaking the crushed pulse in water and heating and/or pressurizing said pulse in water.

The invention related to claim 7is a processed food, which uses the pulse paste of claims 1 to 3.

The invention related to claim 8 is a processed food, which uses the pulse paste produced by the process for producing the pulse paste of claims 4 to 6.
The invention related to claim 9 is the processed food as claimed in claims 7 and 8, which is mayonnaise related food.

### DETAILED DESCRIPTION OF THE INVENTION

The favorable examples of the present invention will be explained hereinafter but these are not everything. The pulse paste of the present invention is obtained by disintegrating a raw material of pulse containing water so that the water content is in the range of 75 to 95wt. %, preferably 80 to 92 wt.%, more preferably 88 to 92 wt.%, based on the total weight of pulse associated component and water contained in pulse.

If water content is less than 75 wt.%, homogenous paste cannot be produced even by disintegrating the pulse. On the other hand, if water content is more than 92 wt.%, liquidity is increased, the self-shape retention ability is lost and therefore, it is impossible to form paste condition.
Here, "paste" means viscosity that can retain the shape by itself. For example, in case of measuring viscosity with B type rotating viscometer (TOKIMEC INC., BH TYPE), it has to have 10000 to 400000mPa•s viscosity.

The pulse that can be used in the present invention are optional pulse, such as pinto bean, azuki bean, kintoki bean, broad bean, sugar peas, sasage, kidney bean, and soybean.

Normally, water content of dried soybean, for example, is about 10 wt.% and even if the soybean is soaked and swollen in water for a day, the water content rises only to about 70 wt. %. Even if the pulse with such level of water content is disintegrated, it is impossible to produce paste directly from said pulse.

In order to produce paste by directly disintegrating pulse, the amount of water in pulse is the extremely essential element. Particularly, it is necessary that the amount of water in pulse is around 75 to 95 wt.%, preferably 80 to 92 wt.%, more preferably 87 to 92 wt.%. That is to say, only the pulse that contains such amount of water content can be used for producing paste by the direct process.

In one example of the present invention, it is possible to raise water content to the above stated level of the present invention by grinding the normal pulse directly which is not soaked in water and is in dry condition, making grained pulse, adding water to the said grained pulse and then, heating and pressurizing it if required. The method for soaking said grained pulse in water or adding water with disintegrating pulse can be also used instead of said method for adding water to said grained pulse. In addition, by heating and pressurizing, it is possible to reduce the time for adjusting water content into the above stated level of the present invention.

In another example of the present invention, in order to raise water content of pulse, it is preferable to increase water content to 75 to 95 wt.% by crushing the pulse that are soaked in water and swollen, forming coarse grained pulse therefrom, adding water to said grained pulse again, and then, heating and pressurizing it if required. The above stated method can be used as the method for adding water to said grained pulse.

In this case, the pulse paste having high nutritional value can be obtained without cellular tissue inside of pulse being destroyed and nutrient element of cellular tissue flowing out to water. Moreover, it enables controlling water content of pulse within the given level and obtaining the expected pulse paste easily by using the osmotic pressure effect of cell membrane.

More specifically, in the above stated example, it is possible to form fine grain condition without destroying cellular tissue inside of pulse by swelling pulse, adding flexibility to the pulse, and then crushing it. As the grained pulse, aggregate of plural cellular tissues, has dramatically more surface area per unit volume compared to the one that is not grained, it can absorb more water and preserve the given amount of water content.

As stated above, it is possible to produce a pulse paste directly from pulse by disintegrating the pulse, water content of which is about 70 to 95 wt.%. Disintegrating process is the process that destroys the form of pulse by grinding down by fraction so that water-soluble polysaccharides inside of pulse are released. By this disintegrating process, water-soluble polysaccharides in pulse are released, and with hydration of this, it is possible to obtain the pulse paste of the present invention with viscosity from pulse.

In the present invention, as the pulse paste in such condition has appropriate viscosity and self-shape retention ability, it is not only easy to be used for cooking but has appropriate texture and flavor. Therefore it is in the optimum condition as an ingredient.
In addition, the pulse paste of the present invention has the same emulsification ability similar to that of egg yolk. The reason of the emulsification ability increase is thought to be that the water-soluble polysaccharides included in dietary fiber of pulse are released outside by the disintegrating process, and then it increases the emulsification ability of lecithin in pulse. Herewith, in case the pulse paste is used for processed food such as mayonnaise related food, for example, it can substitute for egg yolk and can provide the processed food that is more suitable to healthy oriented since there is no need to add emulsifying agent such as increasing-viscosity polysaccharides, or only less amount of emulsifying agent is needed even in case of adding it

As the processed foods of the present invention, there are various processed foods such as mayonnaise related food, ice cream, and cake because the pulse paste of the present invention can be an alternative of eggs. Particularly, because the pulse paste of the present invention has the same emulsification ability similar to that of egg yolk, it can completely demonstrate the character of the present invention in the processed foods in emulsion condition, such as mayonnaise related foods.

As the specific example of the processed food of the present invention, the practical examples of the mayonnaise related food are described as follows.
Here, mayonnaise related food means a notion that includes the semi-solid dressing or the emulsifying liquid dressing such as mayonnaise, salad dressing, French dressing, spread, and tartar sauce.

The present invention can produce the emulsification food, i.e. mayonnaise related food, by using the pulse paste of the present invention instead of egg yolk and adding and mixing vinegar and edible oil to this pulse paste.

In addition, seasoning such as salt, spices, liquid sugar, viscosity increasing stabilizer and water may be mixed if required. In case of using these additives, as for viscosity increasing stabilizer, for example, it is dispersed and dissolved in water in advance and the water, in which the viscosity increasing stabilizer is dispersed, is added mixed to the mixture of seasonings, liquid sugar and pulse paste. The emulsification food can be produced by adding edible oil to this with a mixing instrument such as mixer, for example, and emulsifying it.

In addition, it is possible to produce mayonnaise related food, by mixing agitating water phase part such as vinegar, seasoning and spice, or water phase part, to which water is added, for example, with continuous mixer, mixing said pulse paste, further mixing edible oil, and then, agitating it with colloid mill and sterilizing it by heating.

Although viscosity increasing stabilizer is added to the above described mayonnaise related food, this is not necessary.

It is possible to regulate the mixing rate of vinegar, soybean paste and edible oil according to the utilization purpose of the mayonnaise related food of the present invention, such as texture, flavor, taste and emulsification condition. In particular, the preferable composition rate of soybean paste, edible oil and edible vinegar, which are essential ingredients in producing the mayonnaise related food with the pulse paste of the present invention is as follows.

| | |
|---|---|
| Edible vinegar | 4 to 35 wt.% |
| Soybean paste | 5 to 45 wt.% |
| Edible oil | 30 to 85 wt.% |

In addition, as edible vinegar, fruit vinegar such as apple vinegar, rice vinegar, alcohol vinegar, lees vinegar, black vinegar, wine vinegar, balsamic vinegar can be given as examples.
Also, as edible oil, vegetative fat such as soybean oil, cotton oil, corn oil, sesame oil, safflower oil, colza oil, olive oil, rice oil, grape oil, peanut oil, thistle saffron oil, palm oil, and salad oil or animal fat can be given as examples.

Further, as the above seasonings that can be used for the present invention, sugar, glucose, fructose, or the mixture sugar of them, sweetener such as starch syrup, salt, acidifier such as citric acid, and chemical seasonings are included.

Emulsification of water phase part and oil phase part can be done with mixer, collide mill, paddle mixer, homogenizer, agitator and other known emulsifying instruments.

The processed food that uses the pulse paste of the present invention is the healthy emulsification food, which can avoid the problem of cholesterol contained in egg yolk and the problem of egg allergy, is low in fat and calories and moreover, controls the smell and bitter taste that is peculiar to soybean, and equips rich flavor and full-bodied taste.

### Practical examples

The present invention will be further explained hereinafter with reference to Examples. Followings will define more clearly the effectiveness of the present inventions by using the practical examples. However, the technical scope of the present invention is not limited to those practical examples.

Practical examples use soybean as pulse.

### (Practical examples 1 to 6)

### <Soybean paste>

Soybeans 10kg was soaked in sufficient quantities of water and left at rest for 8 to 10 hours at room temperature.
Then, it was grained by an abrasive cut-off machine (STEPHEN CORPORATION, GERMANY), a crushing machine, and the grained pulse about 3 to 8mm at the average size was made from it.
Further, the soybeans, water content of which is indicated in table 1, was made by adding heated water at 90°C to 20Kg of said grained pulse. The pulse paste of the present invention, viscosity of which is indicated in table 1, was made by using grinder-crushing machine (CERENDIPITOR, MASUKO SANGYO CO., LTD) and disintegrating fully with condition of 0. 05mm clearance between grind stones of said grinder-crushing machine at 2500∼3000rpm rotation.

### (Comparative example 1)

After soaking 10kg soybeans in sufficient quantities of water, leaving it at rest for 8 to 10 hours at room temperature and making it contain 68.2 wt.% of water content, said soybeans were disintegrated by using the same grinder-crushing machine as the practical example 1. However, it wasn't made into paste condition and powdery things were left.

### (Comparative example 2)

By the same method as the practical example 1, the disintegrating process was done using the soybeans with 98. 0 wt. % of water content. However, the obtained thing didn't have self-shape retention ability and was almost in liquid condition.

### (Examination example 1)

Water content of the soybeans, which were uses in the practical examples 1 to 6 and comparative examples 1 and 2 and the viscosity characteristics of the soybean paste obtained from said soybeans are measured by the following method.
Water content was measured using atmospheric pressure ustulation method.
Viscosity characteristic was measured at 25 °C environment temperature, by rotating No.4 rotor at 12 rpm rotating speed with B type rotating viscometer. However, it was impossible to measure comparative examples 1 and 2 as paste could not be produced.

Emulsification ability was measured by inspecting the condition after being left at rest for 60 days at 5°C. The one that resulted in a separation of oil and water layer is indicated with × and the one that resulted in retention of emulsification condition without separation is indicated with ○. However, it was impossible to measure comparative examples 1 and 2 as paste could not be produced.

Flavor and texture was judged by ⓞ (most favorable), ○ (favorable) and × (least favorable) in respect of the smell without peculiar smell and homogeneous smoothness.

### (Measurement result)

The measurement results are indicated in table 1.

**[table 1]**

| | Water component percentage (wt. %) | Viscosity (mPa•s) | Emulsification ability | Flavor/ Texture |
|---|---|---|---|---|
| Working example 1 | 85.6 | 12,600 | ○ | ○ |
| Working example 2 | 82. 7 | 11, 000 | ○ | ○ |
| Working example 3 | 78.2 | 10,500 | ○ | ○ |
| Working example 4 | 91. 4 | 15, 700 | ○ | ⓞ |
| Working example 5 | 90. 8 | 23, 300 | ○ | ⓞ |
| Working example 6 | 90. 1 | 36,000 | ○ | ⓞ |
| Comparative example 1 | 68.2 | - | × | × |
| Comparative example 2 | 98.0 | - | × | × |

From the measurement results of the table 1, in the working examples 1 to 6 related to the present invention, emulsification ability, flavor and texture were better compared to the comparative examples 1 and 2. The fact that water content of the pulse paste, before being disintegrated, is 75 to 95 wt.% is thought to contribute largely to this result.
In addition, examples 4 to 6 especially, out of practical examples 1 to 6, where water content of the pulse paste is 88 to 92 wt.%, had good result with emulsification ability, flavor and texture. Further, in practical examples 4 to 6, the self-shape retention ability was excellent and texture such as mouthfeel was the most preferable thing.

### (Practical examples 7 to 12, comparative examples 3 and 4)

### <Processed food>

Soybean paste as pulse paste of the above stated practical examples 1 to 6, comparative examples 1 and 2 was used for producing mayonnaise related food. The blending ratio is stated as follows.

| | |
|---|---|
| Edible oil (soybean oil) | 55 part by weight |
| Edible vinegar (apple vinegar) | 6 part by weight |
| Seasonings (chemical seasoning) | 1.3 part by weight |
| Salt | 1.5 part by weight |
| Liquid sugar (sugar/fructose glucose liquid sugar) | 2 part by weight |
| Soybean paste | 10 part by weight |
| Viscosity increasing stabilizer (xanthan gum) | 0.4 part by weight |
| Water | 8 part by weight |

The mayonnaise related food of the present invention was obtained by dispersing the above said viscosity increasing stabilizer in water, adding and kneading it into the mixture of soybean paste, seasonings, salt, and liquid sugar, then putting it in a mixer and dropping the edible oil with kneading and making it emulsified.

### (Examination example 2)

Table 2 shows the measurement results, which were measured by the same method as the examination example 1, of the viscosity characteristic and the flavor of mayonnaise related food which is related to the practical examples 7 to 12 and the comparative example 3.
However, the mayonnaise related food, which is obtained by using the soybeans of the comparative example 3, got emulsified instantaneously, but separated in about 5 minutes at room temperature and could not retain the emulsification condition. Also, it was impossible to produce mayonnaise related food by using the soybean of the comparative example 4.

**[Table 2]**

| | Viscosity (mPa•s) | Emulsification ability | Flavor/Texture |
|---|---|---|---|
| Working example 7 | 180,000 | ○ | ○ |
| Working example 8 | 170,000 | ○ | ○ |
| Working example 9 | 130,000 | ○ | ○ |
| Working example 10 | 210,000 | ○ | ⓞ |
| Working example 11 | 260,000 | ○ | ⓞ |
| Working example 12 | 280,000 | ○ | ⓞ |
| Comparative example 3 | 30,000 | - | × |
| Comparative example 4 | - | - | × |

As explained above, the pulse paste of the present invention has high nutritional value, retains flavor, can realize a wide spectrum of use, can form homogeneous paste condition.
Also, the process for producing the pulse paste has high production efficiency since it can produce pulse paste directly from pulse in a direct simple manner.
Also, as the pulse paste of the present invention has similar emulsification ability to that of egg yolk, it can provide the processed food that can replace conventional confectionary or food based on eggs. Particularly, it can be favorably used for the processed food, such as mayonnaise related food, which is in emulsion condition.

## Claims

1. A pulse paste obtained by disintegrating a raw material of pulse containing water so that the water content is in the range of 75 to 95 wt.% based on the total weight of pulse associated component and water contained in pulse.

2. The pulse paste as claimed in claim 1, wherein the water content is in the range of 88 to 92 wt.%.

3. The pulse paste as claimed in claims 1 and 2, wherein said pulse is soybean.

4. A process for producing the pulse paste of claims 1 to 3, wherein comprises making pulse contain 75 to 95 wt.% of water content, and then, disintegrating said pulse and processing it to paste.

5. The process for producing the pulse paste as claimed in claim 4, wherein the method of making pulse contain water molecules includes a process of crushing the swollen pulse.

6. The process for producing the pulse paste as claimed in claim 5, wherein the method of making pulse contain water molecules includes a process of crushing beans, soaking the crushed pulse in water and heating and/or pressurizing the said pulse in water.

7. A processed food, which uses the pulse paste of claims 1 to 3.

8. A processed food, which uses the pulse paste produced by the process for producing the pulse paste of claims 4 to 6.

9. The processed food as claimed in claims 7 and 8, which is mayonnaise related food.
